# EUROPEAN PATENT SPECIFICATION

(11) **EP 1 667 056 B1**
(45) Date of publication and mention of the grant of the patent: **01.02.2012**
(21) Application number: 04787633.9
(22) Date of filing: 06.09.2004
(51) Int. Cl.: G06K 19/07, G06F 1/26, H04M 1/02, H02J 17/00, G06K 7/00, H01Q 1/22

(54) **NON-CONTACT IC SYSTEM AND MOBILE TERMINAL**
KONTAKTLOSES IC-SYSTEM UND MOBILES ENDGERÄT
SYSTEME A CIRCUITS INTEGRES EXEMPT DE CONTACT ET TERMINAL MOBILE

(30) Priority: 08.09.2003 JP 2003315323
(43) Date of publication of application: 07.06.2006
(73) Proprietor: Sharp Kabushiki Kaisha, Osaka 545-8522 (JP)
(72) Inventor: MAMBA, Osamu, 2900056 (JP); FUKUSAKI, Megumi, 5430018 (JP)
(74) Representative: Müller - Hoffmann & Partner
(86) International application number: PCT/JP2004/012929
(87) International publication number: WO 2005/027034

(56) References cited:
- DE-A1- 19 531 625
- GB-A- 2 358 991
- JP-A- 2002 057 617
- JP-A- 2003 036 427
- US-A- 5 317 309
- US-A- 5 521 590
- US-A1- 2003 017 804
- US-A1- 2003 141 989

## Description

### TECHNICAL FIELD

The present invention relates to a non-contact IC system and a mobile terminal for transmitting and receiving data using electromagnetic waves as a medium. In particular, it relates to a non-contact IC system in which a non-coritact IC module is mounted in a terminal such as a mobile telephone.

### BACKGROUND ART

Recently, IC cards containing IC modules are becoming rapidly common because they can achieve much higher security than magnetic cards. Particularly, a non-contact IC card that makes use of data transmission by electromagnetic induction or the like via radio waves has the advantage of being able to operate with high reliability in a very dusty environment because its IC module is not exposed to the outside.

The non-contact IC card operates by utilizing radio waves emitted by an IC card reader/writer as electric power via electromagnetic induction in an antenna coil. The non-contact IC card is not always provided with stable electric power because electric power is supplied via radio waves as a medium. In order to assure a stable power supply, non-contact IC cards or non-contact IC systems equipped with an external power source such as a secondary cell, a capacitor, or a battery have been suggested.

With regard to the provision of power supply to a non-contact IC card, JP Patent Publication (Kokai) No. 2000-90220 A discloses a non-contact IC card comprising a secondary cell or a capacitor, and a charging circuit that charges the secondary cell or the capacitor by receiving electric power supplied via an antenna coil. Also, JP Patent Publication (Kokai) No. 2003-36427 A discloses a semiconductor integrated circuit that can seamlessly switch between electric power supplied via the antenna coil and an external power source such as a battery.

In DE 195 31 625 A1, a non-contact IC card is disclosed, the card comprising an antenna circuit adapted to transmit and receive an electromagnetic wave as a medium for data transmission, and adapted to receive an electric power transmitted by the electromagnetic wave. Further, the card comprises a data processing and storing unit connected to the antenna circuit and a first and second power source for supplying electric power, the first power source being connected to the data processing and storing unit, the second power source being connected to the antenna circuit and the data processing and storing unit such that the electric power received from the antenna circuit is rectified and saved for supplying power to the data processing and storing unit. Further, a power source switching unit connected to the first and second power source and to the data processing and storing unit is included for switching the electric power supplied to the data processing and the storing unit between the first and the second power source.

The independent claims are delimited against this prior art document.

However, such conventional non-contact IC cards are problematic in the following respects.

In order to stably operate a non-contact IC system equipped with a charging system which charges a secondary cell or a capacitor, in a weak or unstable radio wave environment, the secondary cell or the capacitor needs to have been charged. Although it is possible to stably operate the system at all times with a constant supply of electric power from an external power source such as a battery, this would result in an increase in power consumption of such battery. In .. the proposed semiconductor integrated circuit that can seamlessly switch between electric power supplied via the antenna coil and electric power supplied from an external power supply such as a battery, no specific method for realizing power supply control of the non-contact IC system in a mobile terminal such as a mobile telephone has been disclosed.

The present invention has been made in consideration of such problems, and it is an object of the present invention to provide a non-contact IC system and a mobile terminal capable of performing stable communication even when the power supply by electromagnetic induction via radio waves is weak or unstable.

### DISCLOSURE OF THE INVENTION

The invention is defined by the independent claims.

Preferred embodiments are set out in the dependent claims.

### BRIEF DESCRIPTION OF THE DRAWINGS

Fig. 1A shows a front view of a mobile terminal to which a non-contact IC system according to a first embodiment of the invention is applied. Fig. 1B shows a rear view of a mobile terminal employing the non-contact IC system.
Fig. 2 is a block diagram showing the structure of the non-contact IC system.
Fig. 3 is a control sequence diagram showing a power supply control operation of the non-contact IC system
Fig. 4 is a control sequence diagram showing a power supply control operation of a non-contact IC system according to a second embodiment of the invention.

### BEST MODES FOR CARRYING OUT THE INVENTION

The invention will be described in greater detail with reference to the attached drawings.

### First Embodiment

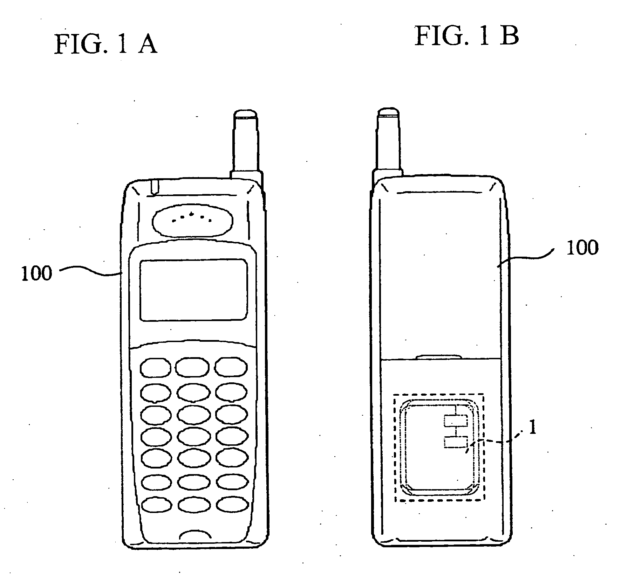

Fig. 1A is a front view of a mobile terminal employing a non-contact IC system according to a first embodiment of the invention, and Fig. 1B shows its rear view. This is an example in which the invention is applied to a communication terminal such as a mobile telephone in which a non-contact IC module is mounted.

In Figs. 1A and 1B, numeral 100 designates a mobile telephone (mobile terminal), and numeral 1 designates the non-contact IC system housed in the mobile telephone 100.

Conventional non-contact IC cards do not have an external power source such as a secondary cell or a battery but utilize electric power by electromagnetic induction via the antenna coil as drive power to the IC module. In contrast, the non-contact IC system of the invention utilizes electric power supplied from the battery of the mobile telephone 100 as drive power, and the electric power by electromagnetic induction is primarily utilized for making a decision in controlling the power supply to the IC module.

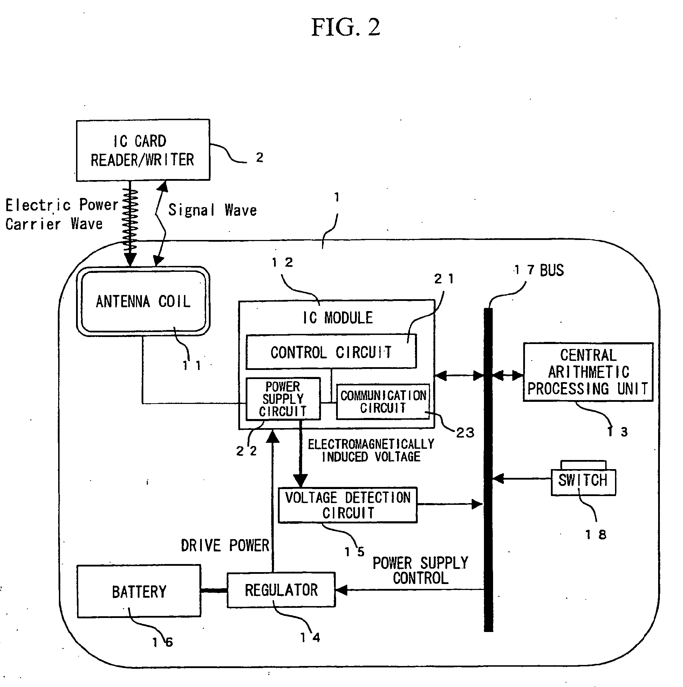

Fig. 2 is a block diagram showing the structure of the non-contact IC system 1.

In Fig. 2, numeral 1 designates the non-contact IC system, and numeral 2 designates an IC card reader/writer.

The non-contact IC system 1 is comprised of an antenna coil 11, an IC module 12 for receiving electric power and communication information via radio waves received by the antenna coil 11, a central arithmetic processing unit 13 (a control means and a communication state detection means) for controlling the entire system and the drive power supply to the IC module 12, a regulator 14 connected to a battery 16 for supplying a predetermined drive power to the IC module 12, a voltage detection circuit 15 (power detection means) for detecting the electric power supplied via the antenna coil 11, the battery 16 comprised of secondary cells or the like, a bus 17, and a switch 18. The IC module 12 is comprised of a control circuit 21, a power supply circuit 22, and a communication circuit 23.

The central arithmetic processing unit 13 is comprised of a microcomputer including a CPU and a ROM, RAM, EEPROM (electrically erasable programmable ROM), or the like for storing a program executed by the CPU, or data. It controls the drive power supply to the IC module 12 in accordance with the results of detection of the electric power supplied via the antenna coil 11 and with the communication state of the IC module 12. The central arithmetic processing unit 13 may be constructed as a dedicated central arithmetic processing unit for the system for performing various controls in the non-contact IC system 1. Alternatively, a control unit may be comprised of the CPU and the like in the mobile telephone and may double as such a unit of the non-contact IC system to run a drive power supply control program. Further alternatively, an electronic circuit may be used in which a sequential control is performed using a timer, without using the processor or the like.

The switch 18 is comprised of a physical switch, such as a push button, and/or a software switch using the menu or options configuration on the mobile telephone 100.

In the non-contact IC system 1, the IC module 12, the central arithmetic processing unit 13, the regulator 14, the voltage detection circuit 15, and the switch 18 are connected via the bus 17.

The antenna coil 11 and the IC module 12 form an interface (I/F) from which the central arithmetic processing unit 13 receives information for performing various controls and a drive power supply control, which will be described later.

The following describes the operation of the non-contact IC system structured as described above. First, an electric power detecting operation performed between the non-contact IC system 1 and the IC card reader/writer 2 is described.

As a radio wave emitted by the IC card reader/writer 2 arrives at the IC module 12 via the antenna coil 11, an electromagnetically induced voltage in the IC module 12 increases due to electromagnetic induction in the antenna coil 11. A voltage change due to the increase in the electromagnetically induced voltage is detected by the voltage detection circuit 15 and then conveyed to the central arithmetic processing unit 13 via the bus 17. The voltage detection circuit 15 constitutes a detection means for detecting the electric power produced by electromagnetic induction.

Also, the radio wave emitted by the IC card reader/writer 2 arrives at the IC module 12 via the antenna coil 11. When this wave contains a communication wave, the IC module 12 performs communication with the IC card reader/writer 2 via the antenna coil 11. A communication start or end signal detected by the IC module 12 is conveyed to the central arithmetic processing unit 13 via the bus 17. In this way, the communication state of the IC module 12 is detected

The central arithmetic processing unit 13 controls the regulator 14 via the bus 17 in accordance with the detection results and turns on or off the drive power supply to the IC module 12. The central arithmetic processing unit 13 constitutes a means for controlling the drive power supply to the IC module 12.

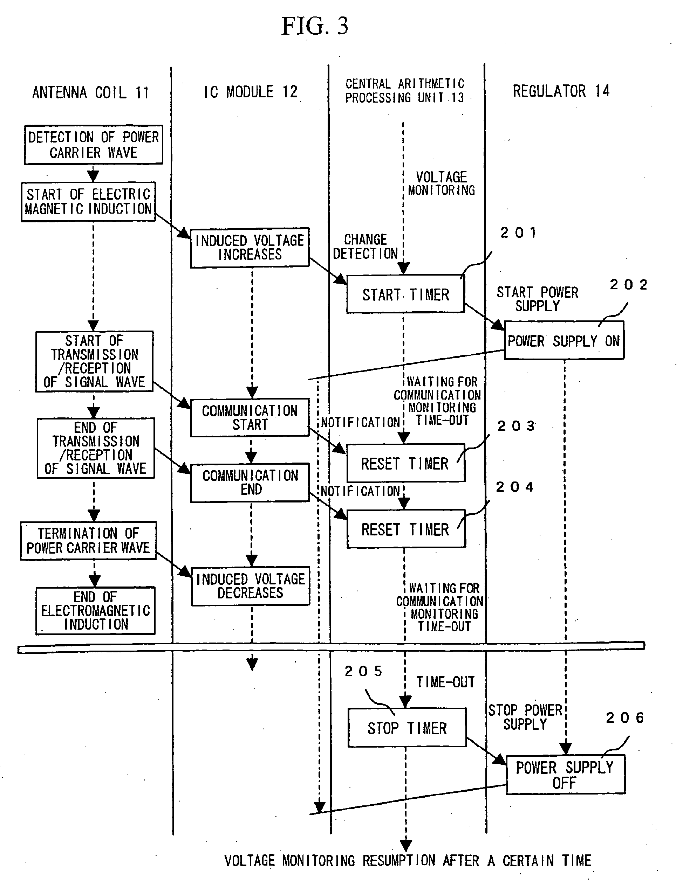

Fig. 3 is a control sequence diagram showing the power supply controlling operation in the non-contact IC system 1.

As the antenna coil 11 detects a weak electric power carrier wave, electromagnetic induction soon occurs in the antenna coil 11. The alternating current produced by the electromagnetic induction is rectified in the power supply circuit 22 in the IC module 12 and outputted to the voltage detection circuit 15 as an electromagnetically induced voltage. The voltage detection circuit 15 detects a voltage change and gives a notification to the central arithmetic processing unit 13. The central arithmetic processing unit 13 then starts the timer in preparation for the provision of electric power to the IC module 12 (step 201). Thereafter, the central arithmetic processing unit 13 controls the regulator 14 so as to start the provision of electric power to the IC module 12 (step 202).

The IC module 12 starts communication with the IC card reader/writer 2 after receiving electric power, and notifies the central arithmetic processing unit 13 of the start of communication. The central arithmetic processing unit 13 resets the set time in the timer upon receiving notification about the communication start (step 203). Upon completion of communication with the IC card reader/writer 2, the IC module 12 notifies the central arithmetic processing unit 13 of the end of communication. The central arithmetic processing unit 13 then resets the set time in the timer upon receiving notification of the end of communication (step 204).

When the timer runs out, the central arithmetic processing unit 13 stops the timer (step 205). In response to the time-out, the central arithmetic processing unit 13 controls the regulator 14 so as to terminate the power supply to the IC module 12 (step 206). The timer is used for processing the termination of power supply, the detection of error in electric power carrier wave, the detection of communication abnormalities, and the resumption of communication immediately after the termination of communication. The timer may be set such that power supply is automatically terminated either in a certain time or immediately after electric power ceases to be detected.

Following step 201, if there is no notification of communication start from the IC module 12 after a predetermined time, step 205 is carried out assuming an error detection in the electric power carrier wave, whereby the power supply to the IC module 12 is terminated. Also, following step 203, if there is no notification of the end of communication from the IC module 12 after a predetermined time, step 205 is carried out assuming a communication abnormality, whereby power supply to the IC module 12 is terminated.

After step 204, in consideration of the possibility of the resumption of communication, the communication state is monitored for a predetermined time. The detection of voltage change is ignored for a predetermined time so that the voltage detection circuit 15 will not detect a voltage change immediately after the termination of power supply to the IC module 12 at step 206. The set times in the timer that are set at step 201, 203, and 204 are each suitably set.

As described above, the non-contact IC system 1 of the invention is mounted within the casing of the mobile telephone 100 and is comprised of the antenna coil 11, the IC module 12 for receiving electric power and communication information via electric waves received by the antenna coil 11, the central arithmetic processing unit 13 for controlling the entire system and the drive power supply to the IC module 12, the regulator 14 for supplying the drive power to the IC module 12, the voltage detection circuit 15 for detecting the electric power via the antenna coil 11, the battery 16, the bus 17, and the switch 18. Because the central arithmetic processing unit 13 controls the drive power supply to the IC module 12 in accordance with the result of detection of the electric power supplied via the antenna coil 11 and the communication state of the IC module 12, stable communication can be achieved even when the power supply by electromagnetic induction via radio waves is weak or unstable.

In conventional non-contact IC systems in which electric power is constantly supplied to the IC module, battery power is consumed even when no communication is being performed. However, in accordance with the non-contact IC system of the invention, because the central arithmetic processing unit 13 monitors the electric power by electromagnetic induction in the antenna coil 11 and the communication of the IC module 12, the power supply to the IC module 12 can be limited to the communication period. Therefore, battery power consumption can be minimized.

In addition, even when the power supply by radio waves is weak or unstable due to the distance from the IC card reader/writer 2, for example, stable communication can be achieved because stable supply of power from the battery 16 is enabled. Also, as compared with conventional non-contact IC cards, the communication distance from the IC card reader/writer 2 can be increased.

### Second Embodiment

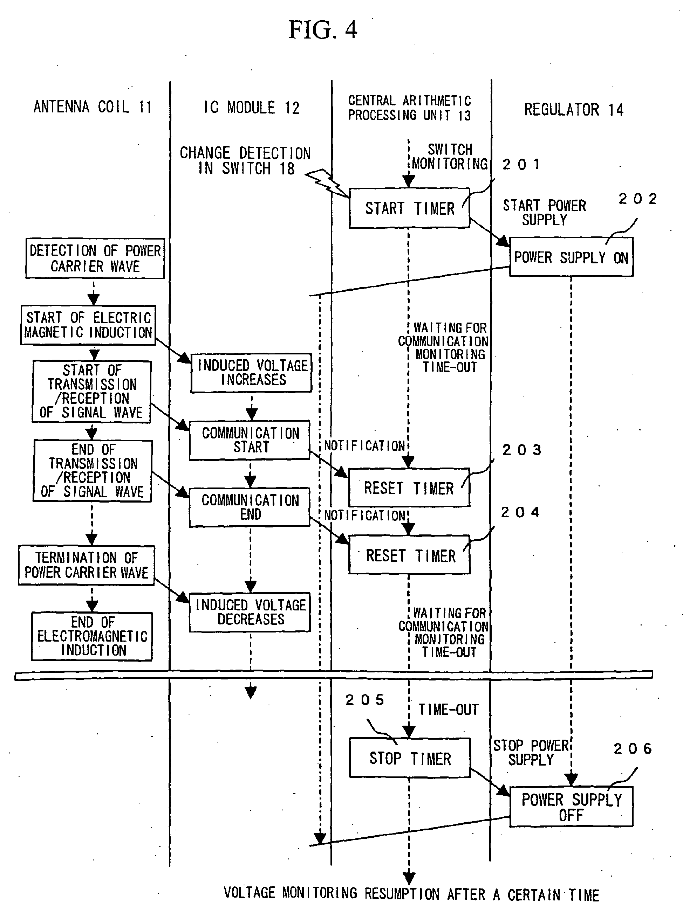

Fig. 4 shows a control sequence diagram of a power supply control operation in the non-contact IC system according to a second embodiment of the invention. The steps that are carried out for the same control sequence as in Fig. 3 are indicated with the same reference numbers, and the explanations of the overlapping portions are omitted. The hardware structure of the non-contact IC system of the embodiment is the same as that shown in Fig. 2.

In the first embodiment, the detection of voltage change in the voltage detection circuit 15 was described as a trigger for carrying out step 201. Instead, in the second embodiment, as shown in Fig. 4, a change in the state of the switch 18 is detected as such a trigger.

Namely, the central arithmetic processing unit 13 monitors a change in the switch 18. Upon detection of a change, the central arithmetic processing unit 13 starts the timer in preparation for the providing of electric power to the IC module 12 at step 201. Thereafter, it controls the regulator 14 and initiates the provision of electric power to the IC module 12 (step 202). The subsequent operations for power supply control are the same as those of the first embodiment.

In accordance with the second embodiment, because the user of the non-contact IC system can anticipate communication with the IC card reader/writer 2, he or she can change the state of the switch 18 before initiating communication. This makes it possible to provide electric power to the IC module prior to radio wave reception. Hence, communication can be initiated immediately after radio wave reception, whereby communication time can be shortened.

While the above-described embodiments show examples where the non-contact IC system is built inside the casing of the mobile telephone 100, the invention may be applied to any type of mobile terminals as long as it involves a non-contact IC system. Examples of electronic devices that can function as the terminal for the non-contact IC system 10 include, in addition to the mobile communication terminals such as mobile telephones and PHS (personal handy-phone systems), mobile information terminals such as laptop personal computers and PDAs (personal digital assistants).

While the embodiments showed examples where the non-contact IC system 1 is mounted within the casing of the terminal, the system may be incorporated in the terminal device or the like as a non-contact IC system function. Alternatively, it may be constructed as a non-contact IC card such that the battery and/or the function for controlling the drive power supply to the IC module depend on the terminal device. In this case, the battery of the terminal device would be shared with the IC module, and the control unit of the terminal device would perform the IC module drive power control function. In any event, because the non-contact IC system is mounted on the mobile terminal device, the battery, the central arithmetic processing unit, or the like can be shared with the mobile terminal device. As a result, the invention can be implemented easily without increasing the number of components and at low cost.

While the embodiments referred to the term "non-contact IC system," this is for explanatory purposes only, and other terms, such as "power supply device," or "power supply control device," may be employed. Further, the non-contact IC system may be in the form of a non-contact IC card, such as the EO-card from East Japan Railway Company, for example.

Furthermore, the type or number of the IC module, voltage detection circuit, regulator, and the like, of which the non-contact IC system is comprised, as well as the manner of setting or resetting the timer, are not limited to those described in the above embodiments.

### INDUSTRIAL APPLICABILITY

As specifically described above, in accordance with the invention, power supply can be limited to the communication period, so that battery power consumption can be minimized. Also, stable communication can be achieved even when the power supply by electromagnetic induction via radio waves is weak or unstable.

## Claims

1. An electric circuit connecting an antenna coil (11) and a battery (16), said electric circuit comprising:
a carrier wave detection means (15) adapted to detect a carrier wave supplied via said antenna coil (11),
a communication means (23) adapted to communicate via said antenna coil (11),
a power control means (13) adapted to control a drive power supply from the battery (16) to the communication means (23),
**characterized in that**
the power control means (13) is adapted to terminate the drive power supply from the battery to the communication means (23) either in a certain time after said carrier wave ceases to be detected by said carrier wave detection means (15) or immediately after said carrier wave ceases to be detected by said carrier wave detection means (15).

2. A terminal device (100) comprising the electric circuit of claim 1, further comprising the antenna coil (11) and the battery (16).

3. The terminal device (100) according to claim 2, wherein the power control means controls that the power from the battery to the communication means is supplied from the start of the detection of the carrier wave to the end of the detection of the carrier wave detected by the carrier wave detection means (15).

4. The terminal device (100) according to claim 2, wherein the detection of the carrier wave by the carrier wave detection means (15) is a detection of a voltage produced by the electromagnetic wave recevied by the antenna coil.

5. The terminal device (100) according to claim 4, wherein the voltage is an electromagnetically induced voltage.

6. The terminal device (100) according to claim 2, wherein the detection of the carrier wave by the carrier wave detection means (15) is a detection of a power produced by the electromagnetic wave received by the antenna coil (11).

7. A method of controlling power supply, comprising:
communicating with an IC card reader/writer (2) using a communication means (23), with supplying electric power from a battery (16) to the communication means (23);
**characterized by**
detecting a ceasing of the carrier wave for the communication from the IC card reader/writer (2); and
terminating the supply of the electric power from the battery (16) to the communication means (23) either in a certain time after the carrier wave ceases to be detected or immediately after the carrier wave ceases to be detected.

## Patentansprüche

1. Elektrische Schaltung, die eine Antennenspule (11) und eine Batterie (16) verbindet, wobei die elektrische Schaltung versehen ist mit:
einem Trägerwellen-Detektionsmittel (15), das dazu ausgelegt ist, eine über die Antennenspule (11) zugeführte Trägerwelle zu detektieren,
einem Kommunikationsmittel (23), das dazu ausgelegt ist, über die Antennenspule (11) zu kommunizieren,
einem Leistungssteuermittel (13), das dazu ausgelegt ist, eine Ansteuerungsleistungsversorgung von der Batterie (16) zu dem Kommunikationsmittel (23) zu steuern,
**dadurch gekennzeichnet, dass**
das Leistungssteuermittel (13) dazu ausgelegt ist, die Ansteuerungsleistungsversorgung von der Batterie zu dem Kommunikationsmittel (23) entweder in einer bestimmten Zeit nach dem Ende der Detektion der Trägerwelle durch das Trägerwellen-Detektionsmittel (15) oder sofort nach dem Ende der Detektion der Trägerwelle durch das Trägerwellen-Detektionsmittel (15) zu beenden.

2. Endgerätvorrichtung (100), die die elektrische Schaltung nach Anspruch 1 und ferner die Antennenspule (11) und die Batterie (16) enthält.

3. Endgerätvorrichtung (100) nach Anspruch 2, wobei das Leistungssteuermittel steuert, dass die Leistung von der Batterie zu dem Kommunikationsmittel ab dem Beginn der Detektion der Trägerwelle bis zu dem Ende der Detektion der Trägerwelle, die durch das Trägerwellen-Detektionsmittel (15) detektiert wird, geliefert wird.

4. Endgerätvorrichtung (100) nach Anspruch 2, wobei die Detektion der Trägerwelle durch das Trägerwellen-Detektionsmittel (15) eine Detektion einer Spannung ist, die durch die von der Antennenspule empfangene elektromagnetische Welle erzeugt wird.

5. Endgerätvorrichtung (100) nach Anspruch 4, wobei die Spannung eine elektromagnetisch induzierte Spannung ist.

6. Endgerätvorrichtung (100) nach Anspruch 2, wobei die Detektion der Trägerwelle durch das Trägerwellen-Detektionsmittel (15) eine Detektion einer Leistung ist, die durch die von der Antennenspule (11) empfangene elektromagnetische Welle erzeugt wird.

7. Verfahren zum Steuern einer Leistungsversorgung, das enthält:
Kommunizieren mit einer IC-Karten-Lese-/Schreibeinrichtung (2) unter Verwendung eines Kommunikationsmittels (23) mit Zufuhr elektrischer Leistung von einer Batterie (16) zu dem Kommunikationsmittel (23);
**gekennzeichnet durch**
Detektieren eines Endes der Trägerwelle für die Kommunikation von der IC-Karten-Lese-/ Schreibeinrichtung (2); und
Beenden der Zufuhr der elektrischen Leistung von der Batterie (16) zu dem Kommunikationsmittel (23) entweder in einer bestimmten Zeit nach dem Ende der Detektion der Trägerwelle oder direkt nach dem Ende der Detektion der Trägerwelle.

## Revendications

1. Circuit électrique reliant une bobine d'antenne (11) et une batterie (16), ledit circuit électrique comprenant :
un moyen de détection d'onde porteuse (15) conçu pour détecter une onde porteuse fournie par l'intermédiaire de ladite bobine d'antenne (11),
un moyen de communication (23) conçu pour communiquer par l'intermédiaire de ladite bobine d'antenne (11),
un moyen de commande de puissance (13) conçu pour commander une alimentation en énergie de pilotage provenant de la batterie (16) à destination du moyen de communication (23),
**caractérisé en ce que**
le moyen de commande de puissance (13) est conçu pour interrompre l'alimentation en énergie de pilotage provenant de la batterie à destination du moyen de communication (23) soit un certain temps après que ladite onde porteuse a cessé d'être détectée par ledit moyen de détection d'onde porteuse (15), soit immédiatement après que ladite onde porteuse a cessé d'être détectée par ledit moyen de détection d'onde porteuse (15).

2. Dispositif formant terminal (100) comprenant le circuit électrique selon la revendication 1, comprenant en outre la bobine d'antenne (11) et la batterie (16).

3. Dispositif formant terminal (100) selon la revendication 2, dans lequel le moyen de commande de puissance commande que la puissance provenant de la batterie à destination du moyen de communication est fournie depuis le début de la détection de l'onde porteuse jusqu'à la fin de la détection de l'onde porteuse détectée par le moyen de détection d'onde porteuse (15).

4. Dispositif formant terminal (100) selon la revendication 2, dans lequel la détection de l'onde porteuse par le moyen de détection d'onde porteuse (15) est une détection d'une tension produite par l'onde électromagnétique reçue par la bobine d'antenne.

5. Dispositif formant terminal (100) selon la revendication 4, dans lequel la tension est une tension induite de façon électromagnétique.

6. Dispositif formant terminal (100) selon la revendication 2, dans lequel la détection de l'onde porteuse par le moyen de détection d'onde porteuse (15) est une détection d'une puissance produite par l'onde électromagnétique reçue par la bobine d'antenne (11).

7. Procédé de commande d'alimentation en énergie, comprenant :
la communication avec un dispositif de lecture / écriture de carte CI (2) en utilisant un moyen de communication (23), avec fourniture d'énergie électrique provenant d'une batterie (16) à destination du moyen de communication (23) ;
**caractérisé par**
la détection d'une cessation de l'onde porteuse pour la communication à partir du dispositif de lecture / écriture de carte CI (2) ; et
l'interruption de l'alimentation en énergie électrique provenant de la batterie (16) à destination du moyen de communication (23) soit un certain temps après que l'onde porteuse a cessé d'être détectée, soit immédiatement après que l'onde porteuse a cessé d'être détectée.
